(19) Europäisches Patentamt
European Patent Office
Office européen des brevets

(11) **EP 3 425 780 B1**

(12) **EUROPÄISCHE PATENTSCHRIFT**

(45) Veröffentlichungstag und Bekanntmachung des Hinweises auf die Patenterteilung:
**27.05.2020   Patentblatt 2020/22**

(51) Int Cl.:
*H02K 41/03* (2006.01)          *H02K 1/14* (2006.01)
*H02K 1/02* (2006.01)

(21) Anmeldenummer: **18181321.3**

(22) Anmeldetag: **03.07.2018**

(54) **TRANSPORTEINRICHTUNG IN FORM EINES LANGSTATORLINEARMOTORS**

TRANSPORT DEVICE IN THE FORM OF A LINEAR MOTOR WITH GUIDEWAY STATOR

DISPOSITIF DE TRANSPORT SOUS FORME D'UN MOTEUR LINÉAIRE À STATOR LONG

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2017   AT 505412017**

(43) Veröffentlichungstag der Anmeldung:
**09.01.2019   Patentblatt 2019/02**

(73) Patentinhaber: **B&R Industrial Automation GmbH**
**5142 Eggelsberg (AT)**

(72) Erfinder: **Reinthaler, Michael**
**5223 Pfaffstätt (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 3 031 755    JP-A- 2007 089 260**

EP 3 425 780 B1

**Beschreibung**

Die gegenständliche Erfindung betrifft eine Transporteinrichtung in Form eines Langstatorlinearmotors mit zumindest zwei benachbart und in einem Segmentabstand in Längsrichtung voneinander beabstandet angeordneten Transportsegmenten, wobei an jedem der beiden Transportsegmente in Längsrichtung eine, mit einer Nutteilung voneinander beabstandet angeordnete Mehrzahl von Antriebsspulen angeordnet ist.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den Antriebsspulen zusammenwirken. Die (elektro)magnetischen Felder der Antriebsmagnete und der Antriebsspulen wirken zusammen, um eine Vortriebskraft auf die Transporteinheit, die die Transporteinheit vorwärtsbewegt, zu erzeugen. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe der Vortriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung. Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Oftmals ist der Langstator bzw. eine Transportstrecke auch in Form von einzelnen Streckenabschnitten aufgebaut, die wiederum aus zusammengefügten Transportsegmenten bestehen. Durch diese Modularität kann ein Langstatorlinearmotor einfacher aufgebaut werden, insbesondere wenn definierte Streckenabschnitte und Transportsegmente verwendet werden. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt. Trotz der vielen Vorteile eines modularen Aufbaus einer Transportstrecke durch einzelne Transportsegmente gibt es auch Nachteile. Beispielsweise ist es erforderlich, dass Wärmedehnungen einer Transportstrecke bzw. von Transportsegmenten, welche aufgrund von erhöhten Temperaturen während des Betriebs des Langstatorlinearmotors auftreten, kompensiert werden müssen. Üblicherweise werden einzelne Transportsegmente zur Ausbildung der Transportstrecke in Längsrichtung direkt aneinandergereiht, ohne dass ein Abstand zwischen den Transportsegmenten vorgesehen wird. Dabei sind die Transportsegmente in der Regel so ausgestaltet, dass der Spulenabstand zwischen den am Rand befindlichen Antriebsspulen zweier benachbarter Transportsegmente dem Spulenabstand benachbarter Antriebsspulen innerhalb eines Transportsegments entspricht. Diese Anordnung der Transportsegmente hat einerseits den Vorteil, dass sich nicht nur innerhalb eines Transportsegments, sondern insbesondere auch im Bereich zwischen zwei Transportsegmenten ein gleichmäßiges Magnetfeld ausbildet, wodurch Störeinflüsse auf die Transporteinheit während des Betriebs vermieden werden können. Die direkte Aneinanderreihung der Transportsegmente hat aber den Nachteil, dass Wärmedehnungen infolge von Temperaturschwankungen nicht bzw. nur unzureichend kompensiert werden können. Dies kann zu Wärmespannungen in den Transportsegmenten bis hin zu Verformungen der Transportstrecke führen, was nachteilig ist.

Ein Spalt zwischen zwei Transportsegmenten, der einen Ausgleich der Wärmedehnungen ermöglichen würde, wurde bisher vermieden, weil sich durch den Spalt bei vorgegebenen Transportsegmenten der Spulenabstand zwischen den am Rand befindlichen Antriebsspulen der zwei benachbarten und durch den Spalt getrennten Transportsegmente, im Vergleich zu zwei benachbarten Antriebsspulen innerhalb eines Transportsegments, vergrößert. Der Spalt wirkt weiters auch als Luftspalt für den magnetischen Kreis im Stoßbereich zweier Transportsegmente. Das führt zu einem ungleichmäßigen Magnetfeld im Bereich zwischen einzelnen Transportsegmenten und folglich zu Störeinflüssen auf die Transporteinheit. Das ungleichmäßige Magnetfeld hat insbesondere einen unerwünschten negativen Einfluss auf die Gleichmäßigkeit der Bewegung der Transporteinheit, die von der Regelung der Bewegung bestenfalls nur zum Teil ausgeregelt werden kann.

Die Dokumente WO 2015/042409 A1, US 2011/0125307 A1, US 2003/0230941 A1 und US 2010/0236445 A1 offenbaren beispielsweise Transportsysteme in unterschiedlichen Ausgestaltungen für verschiedene Anwendungsbereiche bei denen Langstatorlinearmotoren zum Einsatz kommen. Dabei werden einzelne Module in diversen Größen und Formen zu Transportsystemen verbunden. In diesen Dokumenten wird aber keine Lösung der oben beschriebenen Problematik der Kompensation von Wärmedehnungen sowie eines ungleichmäßigen magnetischen Flusses im Bereich zwischen zwei Modulen vorgeschlagen.

Die US 2016/0218608 A1 zeigt zwar eine Möglichkeit, die magnetische Leitfähigkeit zwischen einzelnen Zähnen einzelner Transportsegmente mittels Brückenelementen zu erhöhen, allerdings wird auch hier keine Lösung für das Problem der Wärmedehnung einzelner Transportsegmenten infolge von Temperaturschwankungen beschrieben und auch keine Lösung für das Problem ungleichmäßigen magnetischen Flusses im Bereich zwischen einzelnen Transportsegmenten vorgeschlagen. Die Brückenelemente verhindern oder behindern sogar einen Ausgleich von Wärmedehnungen in Längsrichtung der Transportsegmente.

Die EP 3 031 755 A1 zeigt eine Transporteinrichtung in Form eines Langstatorlinearmotors mit in Längsrichtung aneinander angrenzenden Transportsegmenten. Um im Bereich des Übergangs zwischen zwei Transportsegmenten Ungleichmäßigkeiten im magnetischen Fluss zu verringern, sind sogenannte Flussbrücken zwischen den Transportsegmenten vorgesehen. Nachteilig ist, dass durch die Anordnung im Wesentlichen starrer Flussbrücken, die Eigenschaft eingeschränkt wird, Wärmedehnungen in Längsrichtung zu kompensieren.

Die JP 2007 089260 A offenbart einen Langstatorlinearmotor bei dem zwei Statorsegmente durch einen Spalt 20 einer bestimmten Länge beabstandet sind. Um Schwankungen in der Antriebskraft zu reduzieren werden die Spulen der Statorsegmente über einen Phasenschieber verbunden. Der Phasenschieber verschiebt die elektrischen Phasen der Ströme der Spulen der Statorsegmente relativ zueinander um einen Winkel, der der Länge des Spalts entspricht. Die JP 2007 089260 A offenbart zudem die Anordnung eines nichtmagnetischen Abstandselements hoher Steifigkeit im Spalt, das die Festigkeit des Stators erhöht. Eine Kompensation von Wärmedehnungen ist nicht offenbart.

Es ist daher die Aufgabe der Erfindung, eine Transporteinrichtung in Form eines Langstatorlinearmotors anzugeben, mit der Wärmedehnungen von Transportsegmenten infolge von Temperaturschwankungen kompensiert werden können unter gleichzeitiger Vermeidung der negativen Effekte eines ungleichmäßigen magnetischen Flusses im Stoßbereich zweier benachbarter Transportsegmente.

Erfindungsgemäß wird die Aufgabe dadurch gelöst, dass der Abstand in Längsrichtung zwischen der Spulenmitte einer Endspule eines Transportsegments und dem jeweiligen Ende des Transportsegments in Längsrichtung kleiner als die halbe Nutteilung der beiden benachbarten Endspulen der Transportsegmente ist, wobei die Nutteilung der beiden benachbarten Endspulen der Nutteilung der Antriebsspulen zumindest eines der Transportsegmente entspricht. Dadurch werden zum einen Wärmedehnungen in Längsrichtung der Transportsegmente ermöglicht. Die geringe Veränderung der Nutteilung zwischen zwei Endspulen aufgrund der Wärmedehnungen kann dabei vernachlässigt werden, bzw. ist die Regelung der Bewegung der Transporteinheiten durchaus in der Lage diese geringen Schwankungen ohne wesentliche Auswirkungen auf die Bewegung zu kompensieren. Zusätzlich kann durch die Beabstandung angrenzender Transportsegmente in Längsrichtung voneinander eine Schwingungsentkopplung der angrenzenden Transportsegmente erreicht werden. Vorteilhafterweise sind die Nutteilungen der Antriebsspulen benachbarter Transportsegmente gleich groß, weil dadurch ein Aufbau der Antriebsspulen mit einer durchgehenden im Wesentlichen gleichen Nutteilung realisiert werden kann, wodurch Ungleichmäßigkeiten des Magnetfeldes verringert werden können.

Vorteilhafterweise beträgt der maximale Segmentabstand 1% des Mittelwerts der Gesamtlängen zweier benachbarter Transportsegmente oder ist so festgelegt, dass der Abstand zwischen der Spulenmitte einer Endspule eines Transportsegments und dem jeweiligen Ende des Transportsegments der halben Spulenbreite einer Antriebsspule entspricht, wobei das äußere Spulenende der Endspule des jeweiligen Transportsegments mit dem jeweiligen Ende des Transportsegments abschließt. Dadurch kann trotz unterschiedlicher Gesamtlängen der Transportsegmente gewährleistet werden, dass der Segmentabstand immer ausreichend groß ist, um eine Wärmedehnung der Transportsegmente zu ermöglichen, und nicht zu groß ist, um den negativen Einfluss eines ungleichmäßigen Magnetfeldes zu minimieren. Weiters wird gewährleistet, dass eine Endspule nicht über das Ende eines Transportsegments hinausragt.

Vorzugsweise ist der minimale Segmentabstand so festgelegt, dass bei einer definierten maximalen Temperatur keine Berührung der benachbarten Transportsegmente stattfindet. Dadurch können mechanische Spannungen in den Transportsegmenten vermieden werden, die bei einem Kontakt benachbarter Transportsegmente unter Wärmedehnung der Transportsegmente auftreten würden. Nachdem die Wärmedehnungen im Vorfeld aufgrund der bekannten Konstruktion und des erwarteten Betriebs des Langstatorlinearmotors abgeschätzt werden können, kann dieser minimale Segmentabstand im Vorfeld festgelegt werden.

Vorteilhafterweise ist im Stoßbereich zwischen benachbarten Transportsegmenten ein vorzugsweise elastisches Material magnetischer Leitfähigkeit angeordnet, wobei die magnetische Leitfähigkeit zumindest um den Faktor 10, vorzugsweise um den Faktor 100, größer als Luft ist. Dadurch kann der magnetische Fluss zwischen den benachbarten Endabschnitten erhöht werden und die Störeinflüsse auf die Transporteinheiten im Bereich zwischen einzelnen Transportsegmenten aufgrund eines Luftspaltes im magnetischen Kreis weiter minimiert werden.

Weitere Verbesserungen bzgl. einer Minimierung von Störeinflüssen auf Transporteinheiten bedingt durch ein ungleichmäßiges magnetischen Flusses können erzielt werden, wenn an den Endabschnitten der Transportsegmente zahnförmige Erweiterungen vorgesehen sind.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 einen beispielhaften Aufbau einer Transporteinrichtung in Form eines Langstatorlinearmotors,

Fig. 2 eine Detailansicht zweier benachbarter gerader Transportsegmente,

Fig. 3 eine weitere Detailansicht zweier benachbarter gerader Transportsegmente,

Fig. 4 eine Detailansicht zweier benachbarter gekrümmter Transportsegmente.

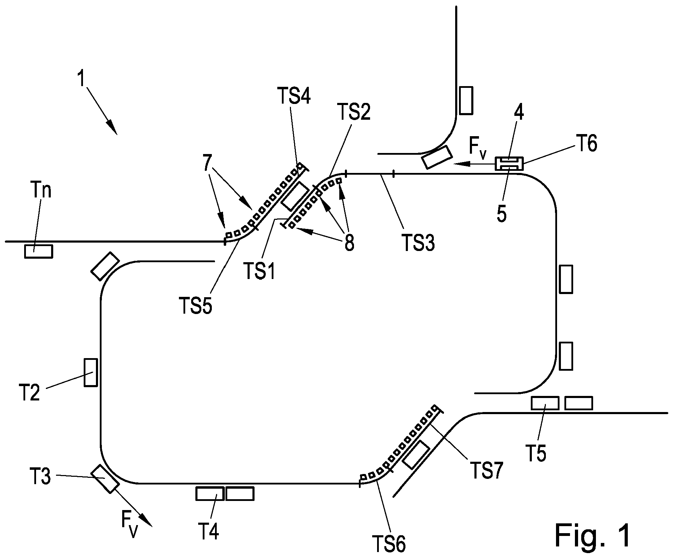

In Fig.1 ist eine Transporteinrichtung 1 in Form eines Langstatorlinearmotors beispielhaft dargestellt. Die Transporteinrichtung 1 besteht aus einer Anzahl von Transportsegmenten TSk (k ist hierbei ein Index, der für alle vorhandenen Transportsegmente TS1, TS2, TS3, ... steht), von denen aus Gründen der Übersichtlichkeit beispielhaft nur die Transportsegmente TS1 ... TS7 bezeichnet sind. Ein Transportsegment TSk ist jeweils an einer Seite der Transportstrecke 20 angeordnet. Die Transportsegmente TSk bilden verschiedene Streckenabschnitte aus, beispielsweise eine Gerade, Kurven mit unterschiedlichen Winkeln und Radien, Weichen, usw., und können sehr flexibel zusammengesetzt werden, um die Transportstrecke der Transporteinrichtung 1 auszubilden. Die Transportsegmente TSk zusammen bilden damit die Transportstrecke 20, entlang der die Transporteinheiten Tn (n ist hierbei ein Index, der für alle vorhandenen Transporteinheiten T1, T2, T3, T4, ... steht) bewegt werden können. Dieser modulare Aufbau ermöglicht eine sehr flexible Gestaltung der Transporteinrichtung 1. Die Transportsegmente TSk sind dabei natürlich an einer ortsfesten Stützkonstruktion 6 (in Fig.1 nicht dargestellt) angeordnet.

Die Transporteinrichtung 1 ist als Langstatorlinearmotor ausgeführt, bei denen die Transportsegmente TSk in an sich bekannter Weise jeweils einen Teil eines Langstators des Langstatorlinearmotors ausbilden. Entlang der Transportsegmente TSk sind daher in Längsrichtung in bekannter Weise eine Vielzahl von den Stator ausbildenden, ortsfest angeordnete elektrischen Antriebsspulen 7, 8 angeordnet (in Fig.1 aus Gründen der Übersichtlichkeit nur für die Transportsegmente TS1, TS2, TS4, TS5, TS6, TS7 angedeutet), die mit Antriebsmagneten 4, 5 an den Transporteinheiten T1 ... Tn (in Fig.1 aus Gründen der Übersichtlichkeit nur für die Transporteinheit T6 angedeutet) zusammenwirken können, um in bekannter Weise eine Vortriebskraft $F_v$ zum Bewegen der Transporteinheit Tn zu erzeugen.

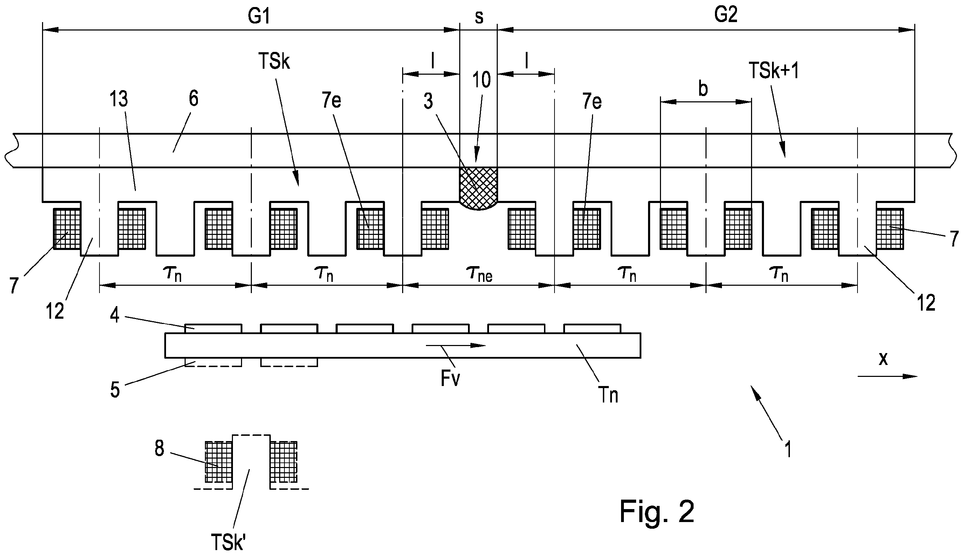

Fig. 2 zeigt zur Erläuterung der Erfindung eine Detailansicht zweier benachbarter gerader Transportsegmente TSk, TSk+1. Die Transportsegmente TSk, TSk+1 sind dabei zur Ausbildung der Transportstrecke 20 an einer stationären Stützkonstruktion 6 angeordnet oder bilden selbst einen Teil der stationären Stützkonstruktion 6. An den Transportsegmenten TSk bzw. TSk+1 sind die Antriebsspulen 7, 8 des Langstatorlinearmotors angeordnet und an der Transporteinheit Tn sind die Antriebsmagnete 4, 5 angeordnet. Ein Antriebsmagnet 4, 5 kann als Elektromagnet (Erregungsspulen) und/oder als Permanentmagnet ausgeführt sein. Die Erfindung wird nachfolgend am Beispiel einer in Bewegungsrichtung x gesehen einseitigen Anordnung von Antriebsspulen 7 und zugeordneten Antriebsmagneten 4 erläutert, obwohl natürlich auch eine zweitseitige Anordnung, mit Transportsegmenten TSk, TSk' mit Antriebsspulen 7, 8 und Transporteinheiten Tn mit Antriebsmagneten 4, 5 an beiden Seiten, denkbar ist, wie in Fig.2 angedeutet.

Die Antriebsspulen 7 sind vorzugsweise auf Zähnen 12 eines ferromagnetischen Kerns 13 (beispielsweise ein Eisen Blechpaket) angeordnet. Die Antriebsspulen 7 können aber natürlich auch kernlos ausgeführt sein. Eine Transportstrecke 20 kann je nach Anwendung einseitig oder beidseitig ausgeführt sein. Bei einer einseitigen Ausführung wären dann nur auf einer Seite der Transporteinheit Tn Antriebsmagnete 4 (oder 5) angeordnet und am Streckenabschnitt bzw. den Transportsegmenten TSk des Streckenabschnitts wären entsprechend Antriebsspulen 7 (oder 8) angeordnet. Für die Beschreibung der Erfindung wird der Einfachheit halber nachfolgend nur auf eine einseitige Ausführungsform mit Antriebsmagneten 4 und Antriebsspulen 7 Bezug genommen, selbstverständlich umfasst die Erfindung aber auch eine beidseitige Ausführungsform.

Die Transporteinheit Tn ist so ausgeführt, dass die Antriebsmagnete 4 gegenüber den Antriebsspulen 7 angeordnet sind, sodass die Antriebsmagnete 4 mit den Antriebsspulen 7 zur Erzeugung einer Vortriebskraft Fv zusammenwirken können. Damit ist die Transporteinheit Tn entlang der Transportstrecke in Längsrichtung bewegbar. An der Transporteinheit Tn können natürlich auch noch (hier aus Gründen der Übersichtlichkeit nicht dargestellte) Führungselemente wie Rollen, Räder, Gleitflächen, Führungsmagnete, etc., vorgesehen sein, um die Transporteinheit Tn entlang der Transportstrecke 20 zu führen und zu halten, insbesondere auch im Stillstand. Die Führungselemente der Transporteinheit Tn wirken dabei zur Führung mit der Transportstrecke 20, z.B. der stationären Stützkonstruktion 6 oder den Transportsegmenten TSk, TSk+1, zusammen, z.B. in dem sich die Führungselemente an der Transportstrecke abstützen, einhaken, daran abgleiten oder abrollen, etc. Zwischen den Antriebsspulen 7 und den Antriebsmagneten 4 ist ein Luftspalt ausgebildet, der unter anderem durch die Führungselemente eingestellt und aufrechterhalten wird. Zur Erzeugung eines in Längsrichtung x der Transportstrecke 20, also in Bewegungsrichtung der Transporteinheit Tn möglichst gleichmäßigen magnetischen Flusses und folglich einer gleichmäßigen Vortriebskraft Fv sind die Antriebsspulen 7 üblicherweise in Längsrichtung (bzw. Bewegungsrichtung) x gesehen in einem üblicherweise als Nutteilung $\tau_n$ bezeichneten regelmäßigen Abstand voneinander an den Transportsegmenten TSk, TSk+1 angeordnet.

Einzelne Transportsegmente TSk, TSk+1 können zur Ausbildung der Transportstrecke 20 in einem definierten Segmentabstand s voneinander beabstandet, z.B. auf der Stützkonstruktion 6, angeordnet sein, um eine Wärmedehnung der Transportsegmente infolge der im Betrieb auftretenden Temperaturen ausgleichen zu können. Das bedingt natürlich, dass die Anordnung der Transportsegmente TSk, TSk+1 ein solche Wärmedehnung in Längsrichtung x ermöglicht. Eine Möglichkeit einer solchen Anordnung ist beispielsweise in der EP 3 156 354 A1 beschrieben. Dieser Segmentabstand s würde aber bei einer vorgegebenen konstruktiven Gestaltung der Transportsegmente TSk, TSk+1 dazu führen, dass im Stoßbereich 10 zweier benachbarter Transportsegmente TSk, TSk+1 die Nutteilung $\tau_{ne}$ größer wäre, als die Nutteilung $\tau_n$ innerhalb eines Transportsegments. Das würde im Stoßbereich 10 zu einem unerwünschten ungleichmäßigen magnetischen Fluss, im Wesentlichen zu einer Abschwächung des magnetischen Flusses, führen.

Um einen möglichst gleichmäßigen magnetischen Fluss auch über mehrere Transportsegmente TSk, TSk+1 hinweg aufrechtzuerhalten, d.h. auch im Stoßbereich 10 zwischen einzelnen Transportsegmenten TSk, TSk+1, ist erfindungsgemäß vorgesehen, dass der Abstand I (in Längsrichtung x bzw. Bewegungsrichtung gesehen) zwischen der Spulenmitte einer Endspule 7e eines Transportsegments TSk, TSk+1 und dem jeweiligen Ende des Transportsegments TSk, TSk+1 kleiner als die halbe Nutteilung $\frac{\tau_{ne}}{2}$ der beiden benachbarten Endspulen 7e der Transportsegmente TSk, TSk+1 ist. Die Nutteilung $\tau_{ne}$ zwischen den Endspulen 7e benachbarter Transportsegmente TSk, TSk+1 soll dabei der Nutteilung $\tau_n$ der Antriebsspulen 7 zumindest eines der Transportsegmente TSk, TSk+1 entsprechen. Als Endspulen 7e werden folglich die Antriebsspulen 7 am jeweiligen Anfang und Ende eines Transportsegments TSk, TSk+1 bezeichnet. Das "Ende" eines Transportsegments ist die Stelle der größten Ausdehnung eines Transportsegmentes TSk, TSk+1 in Längsrichtung x.

Dadurch wird einerseits gewährleistet, dass die Transportstrecke 20 nicht nur innerhalb eines Transportsegments TSk, TSk+1, sondern insbesondere auch im Stoßbereich 10 zwischen zwei Transportsegmenten TSk, TSk+1 eine konstante Nutteilung $\tau_{ne}$ aufweist. Dadurch kann auch im Stoßbereich 10 der Einfluss einer unregelmäßiger Nutteilung auf den magnetischen Fluss verringert werden.

Anderseits wird dadurch gleichzeitig sichergestellt, dass jedenfalls ein Segmentabstand s zwischen den benachbarten Transportsegmenten TSk, TSk+1 besteht. Der Abstand I zwischen der Spulenmitte einer Endspule 7e eines Transportsegments TSk, TSk+1 und dem jeweiligen Ende des Transportsegments TSk, TSk+1 kann also bei festgelegter Nutteilung $\tau_{ne}$ (die der Nutteilung $\tau_n$ entspricht) nur kleiner als die halbe Nutteilung $\frac{\tau_{ne}}{2}$ gewählt werden, sodass sich automatisch ein Segmentabstand s einstellt. Das bedeutet im Wesentlichen, dass durch die Wahl des Abstandes I zwischen der Spulenmitte einer Endspule 7e eines Transportsegments TSk, TSk+1 und dem jeweiligen Ende des Transportsegments TSk, TSk+1 die Größe des Segmentabstandes s festgelegt werden kann. Durch den Segmentabstand s wird zusätzlich eine teilweise Schwingungsentkopplung benachbarter Transportsegmente TSk, TSk+1 erreicht. Das bedeutet, dass unerwünschte Vibrationen von einem Transportsegment TSk nicht bzw. nur in geringem Maße auf ein benachbartes Transportsegment TSk+1 übertragen werden. Schwingungen bzw. Vibrationen können einerseits durch den Betrieb der Transporteinrichtung 1 selbst entstehen, sie können aber andererseits auch durch äußere Einflüsse auf die Transportstrecke 20 und Transportsegmente TSk übertragen werden, z.B. durch vorbeifahrende Fahrzeuge oder Maschinen. Durch die teilweise Schwingungsentkopplung können störende Einflüsse auf die Wechselwirkung zwischen Transporteinheit Tn und Transportsegmenten TSk, TSk+1 aufgrund von Schwingungen verringert werden, was unter anderem zu einer erhöhten Laufruhe der Transporteinheit Tn beiträgt.

Üblicherweise erfolgt der Aufbau einer Transportstrecke 20 einer Transporteinrichtung 1 bei Umgebungstemperatur, also im Wesentlichen bei einer Raumtemperatur von z.B. 20 - 25°C. Vorteilhafterweise werden die einzelnen Transportsegmente TSk, TSk+1 dabei so an der Transportstrecke 20 angeordnet, dass bei der Umgebungstemperatur während der Montage erfindungsgemäß die Nutteilung $\tau_{ne}$ zwischen den Endspulen 7e benachbarter Transportsegmente TSk, TSk+1 der Nutteilung $\tau_n$ der Antriebsspulen 7 zumindest eines der Transportsegmente TSk, TSk+1 entspricht. Vorteilhafterweise sind die Nutteilungen $\tau_n$ der Antriebsspulen 7 benachbarter Transportsegmente TSk, TSk+1 gleich groß. Der Abstand I zwischen der Spulenmitte einer Endspule 7e eines Transportsegments TSk, TSk+1 und dem jeweiligen Ende des Transportsegments TSk, TSk+1 kann dann im Wesentlichen beliebig festgelegt werden, jedenfalls ist er erfindungsgemäß aber geringer als die halbe Nutteilung $\frac{\tau_{ne}}{2}$, sodass sich bei Umgebungstemperatur ein Segmentabstand s zwischen den benachbarten Transportsegmenten TSk, TSk+1 einstellt. Vorteilhafterweise wird der Abstand I so festgelegt, dass der sich daraus ergebende Segmentabstand s groß genug ist, um eine etwaige Wärmedehnung der Transportstrecke 20 bzw. der einzelnen Transportsegmente TSk, TSk+1 aufgrund der zu erwartenden Temperatur während des Betriebs der Transporteinrichtung 1 zu ermöglichen. Die erfindungsgemäße Anordnung der Transportsegmente TSk, TSk+1, insbesondere die, über mehrere Transportsegmente TSk, TSk+1 gleichmäßige Nutteilung $\tau_{ne} = \tau_n$, wird vorzugsweise während der Montage der Transportstrecke 20 durchgeführt. Das bedeutet aber, dass etwaige Veränderungen des Segmentabstandes s und der Nutteilungen $\tau_{ne}$, $\tau_n$ infolge eines, während des Betriebs der Transporteinrichtung 1, auftretenden Wärmeeintrages in die Transportstrecke 20 und einer daraus resultierenden Wärmedehnung nicht berücksichtigt werden. Insbesondere würde sich durch eine Wärmedehnung der Transportsegmente TSk, TSk+1 die Nutteilung $\tau_{ne}$ gegenüber der Nutteilung $\tau_n$ verringern, was unerwünscht ist, da der magnetische Fluss im Stoßbereich 10 dadurch negativ beeinflusst würde. In den meisten Anwendungsfällen der Transporteinrichtung 1 kann der Einfluss der Wärmedehnung infolge eines Wärmeeintrages aber vernachlässigt werden. Bei besonders hohen zu erwartenden Temperaturen und damit hohen zu erwartenden Wärmedehnungen wäre es aber auch denkbar, die erfindungsgemäße Anordnung der Transportsegmente TSk, TSk+1 so vorzunehmen, dass sich die über mehrere Transportsegmente TSk, TSk+1 erstreckende gleichmäßige Nutteilung $\tau_{ne} = \tau_n$ erst bei einer bestimmten erwarteten Betriebstemperatur einstellt, wie nachfolgend erklärt wird.

Während des Betriebs der Transporteinrichtung 1 erfolgt üblicherweise ein Wärmeeintrag in die Transportsegmente TSk, TSk+1, bedingt durch einen elektrischen Stromfluss durch die Antriebsspulen 7, Reibung der Führungseinrichtung, Umgebungsbedingungen wie Raumtemperatur etc., oder auch durch Wärmeeintrag des Transportguts, das mit einer Transporteinheit Tn transportiert wird. Durch diesen Wärmeeintrag erwärmen sich die Transportsegmente TSk, TSk+1 auf eine bestimmte Temperatur, die im Normalfall höher ist als die Temperatur bei der Montage der Transportstrecke 20, und die Transportsegmente TSk, TSk+1 unterliegen dadurch natürlich einer gewissen Wärmedehnung in Längsrichtung x in Abhängigkeit ihres konstruktiven Aufbaus und in Abhängigkeit des verwendeten Materials. Beispielsweise dehnt sich Aluminium unter Wärmeeinfluss stärker aus als Eisen oder Stahl. Diesen Zusammenhang gilt es bei der Wahl der Werkstoffe und bei der konstruktiven Auslegung einer Transportstrecke 20 zu berücksichtigen. Der Segmentabstand s dient dazu, diese Wärmedehnung in Längsrichtung x zu ermöglichen.

Der Wärmeeintrag und die Temperatur der Transportsegmente TSk, TSk+1 im Betrieb der Transporteinrichtung 1 können aufgrund des bekannten konstruktiven Aufbaus und des angestrebten Betriebes der Transporteinrichtung 1 im Vorfeld abgeschätzt werden. Diese erwartete Temperatur wird im Folgenden als Betriebstemperatur bezeichnet. Wenn kein, oder nur ein geringer, Wärmeeintrag in die Transportsegmente TSk, TSk+1 erwartet wird, entspricht die Betriebstemperatur im Wesentlichen der Umgebungstemperatur und die Wärmedehnung wird entsprechend gering und zu vernachlässigen sein.

Der Segmentabstand s kann sich beispielsweise infolge eines Wärmeeintrages im Betrieb der Transporteinrichtung 1 von einem Anfangssegmentabstand $s_0$ zum Segmentabstand $s < s_0$ bei Betriebstemperatur verkleinern. Das bedingt natürlich in nachvollziehbarer Weise, dass die Transportsegmente TSk, TSk+1 in Längsrichtung x gesehen konstruktiv so gestaltet sein müssen, dass diese zumindest um den Anfangssegmentabstand $s_0$ zueinander beabstandet angeordnet werden können. Dieser Umstand ist erfindungsgemäß dadurch berücksichtigt, dass der Abstand I zwischen der Spulenmitte einer Endspule 7e eines Transportsegments TSK, TSk+1 und dem jeweiligen Ende des Transportsegments TSK, TSk+1 kleiner als die halbe Nutteilung $\frac{\tau_{ne}}{2}$ der beiden benachbarten Endspulen 7e der Transportsegmente TSk, TSk+1 ist. Liegt die Betriebstemperatur im Bereich der Umgebungstemperatur, ist die Wärmedehnung der Transportsegmente TSk, TSk+1 vernachlässigbar gering, der Anfangssegmentabstand $s_0$ entspricht dann im Wesentlichen dem Segmentabstand s bei Betriebstemperatur.

Durch die erfindungsgemäße Ausführung der Transporteinrichtung 1 kann gewährleistet werden, dass während des Betriebs der Transporteinrichtung 1 auftretende Störeinflüsse auf die Transporteinheit Tn aufgrund eines ungleichmäßigen magnetischen Flusses infolge eines von der Nutteilung $\tau_n$ abweichenden Nutteilung $\tau_{ne}$

der Endspulen 7e ($\tau_n \neq \tau_{ne}$) im Stoßbereich 10 zwischen zwei Transportsegmenten TSk, TSk+1 reduziert werden. Sowohl eine zu große Nutteilung $\tau_{ne} > \tau_n$, als auch eine zu kleine Nutteilung $\tau_{ne} < \tau_n$ sind nachteilig. Die Materialien und Abmessungen der Transportsegmente TSk können z.B. auch so gewählt werden, dass sich bei der erwarteten und sich während des Betriebs einstellenden Betriebstemperatur eine Nutteilung $\tau_{ne}$ der Endspulen 7e einstellt, die der Nutteilung $\tau_n$ der Transportsegmente TSk, TSk+1entspricht. "Entsprechen" bedeutet dabei natürlich keine exakte Übereinstimmung, sondern eine möglichst genaue Übereinstimmung. Vorzugsweise sollte aber die Nutteilung $\tau_{ne}$ zwischen den Endspulen 7e bei der Betriebstemperatur im Bereich von $\pm 20\%$ der Nutteilung $\tau_n$ der Antriebsspulen 7 der Transportsegmente TSk, TSk+1 sein.

Beispielsweise könnte bei der Montage der Transportsegmente TSk, TSk+1 (z.B. bei Raumtemperatur) die Nutteilung $\tau_{ne}$ größer sein als die Nutteilung $\tau_n$ und erst während des Betriebs bei Erreichen einer im Vergleich zur Raumtemperatur höheren Betriebstemperatur aufgrund der Wärmedehnung den Wert der Nutteilung $\tau_n$ erreichen. Die Betriebstemperatur könnte aber natürlich auch im Bereich der Raumtemperatur liegen, dann wäre der Wert der Nutteilung $\tau_{ne}$ im Wesentlichen ähnlich dem Wert $\tau_n$ und würde sich während des Betriebs nicht oder nur gering ändern.

Vorteilhafterweise beträgt der maximale Segmentabstand $s_{max}$ 1% des Mittelwerts der Gesamtlängen G1, G2 zweier benachbarter Transportsegmente TSk, TSk+1 oder ist so festgelegt ist, dass Abstand l zwischen der Spulenmitte einer Endspule 7e eines Transportsegments TSK, TSk+1 und dem jeweiligen Ende des Transportsegments TSk, TSk+1 der halben Spulenbreite $\frac{b}{2}$ einer Antriebsspule 7, 8 entspricht, wobei das äußere Spulenende der Endspule 7e des jeweiligen Transportsegments TSk, TSk+1 in Längsrichtung vorzugsweise mit dem jeweiligen Ende des Transportsegments TSk, TSk+1 abschließt. Als äußeres Spulenende wird dabei der, sich in Längsrichtung maximal erstreckende und dem Ende des Transportsegments TSk, TSk+1 zugewandte, Bereich der Endspule 7e bezeichnet. Transportsegmente TSk, TSk+1 gibt es in verschiedenen Ausführungen und Längen, dabei steigt die Wärmedehnung natürlich mit der Gesamtlänge des Transportsegments TSk, TSk+1. Bei gleicher Temperaturerhöhung zweier Transportsegmente TSk, TSk+1 mit Gesamtlängen G1 > G2 würde demgemäß das Transportsegment TSk mit Gesamtlänge G1 eine größere Wärmedehnung erfahren, als das Transportsegment TSk+1 mit der Gesamtlänge G2. Aufgrund der beschriebenen Vielfalt der Ausgestaltung der Transportsegmente TSk, TSk+1, insbesondere hinsichtlich ihrer Gesamtlänge G1, G2, und der damit verbundenen sehr unterschiedlichen Wärmedehnungen ist es zweckmäßig, den maximalen Segmentabstand $s_{max}$ auf die Gesamtlängen G1, G2 der Transportsegmente TSk, TSk+1 zu beziehen, anstatt einer absoluten Maßangabe. Vorteilhafterweise ist der maximale Segmentabstand $s_{max}$ so festgelegt, dass das äußere Spulenende der Endspule 7e des jeweiligen Transportsegments TSK, TSk+1 in Längsrichtung vorzugsweise mit dem jeweiligen Ende des Transportsegments TSK, TSk+1 abschließt. Dadurch ist gewährleistet, dass die Endspule 7e nicht über das Ende des Transportsegments TSk, TSk+1 hinausragt und damit der elektromagnetische Kreis der Endspule 7e nicht negativ beeinflusst wird.

Vorzugsweise ist aber auch ein minimaler Segmentabstand $s_{min}$ so festgelegt, dass bei einer definierten maximalen Temperatur keine Berührung der benachbarten Transportsegmente TSk, TSk+1 stattfindet. Um einen möglichst gleichmäßigen magnetischen Fluss im Stoßbereich 10 zwischen den Transportsegmenten TSk, TSk+1 zu erreichen, ist es vorteilhaft, den Segmentabstand s (und dadurch den magnetischen Widerstand des Luftspaltes zwischen den Transportsegmenten TSk, TSk+1) so gering wie möglich zu halten. Es muss aber gewährleistet werden, dass es bei Wärmedehnung der Transportsegmente TSk, TSk+1 nicht zu einem Kontakt der Transportsegmente TSk, TSk+1 kommt. Eine Berührung der Transportsegmente TSk, TSk+1 könnte bei weiterer Wärmedehnung zu mechanischen Spannungen in den Transportsegmenten TSk, TSk+1 bis hin zu Verformungen der Transportsegmente TSk, TSk+1 und folglich der Transportstrecke 20 führen, was möglichst vermieden werden sollte.

Gemäß einer weiteren Ausführungsform der Erfindung ist es vorteilhaft, wenn zwischen benachbarten Transportsegmenten TSk, TSk+1 im Stoßbereich 10 ein, vorzugsweise elastisches, Material 3 magnetischer Leitfähigkeit $\mu$, wobei die magnetische Leitfähigkeit $\mu$ zumindest um Faktor 10, vorzugsweise zumindest um Faktor 100 größer als Luft ist angeordnet ist. Denkbar wären z.B. magnetische Pasten, Elastomere, Gummi, etc., die in den Stoßbereich 10 zwischen zwei Transportsegmenten TSk, TSk+1 eingebracht werden. Hohe magnetische Leitfähigkeit $\mu$ bedeutet in diesem Zusammenhang eine magnetische Leitfähigkeit $\mu$, die zumindest deutlich (mindestens um den Faktor 10) über jener von Luft liegt, vorzugsweise im Bereich des Kerns 13. Durch die idealerweise elastische Verformbarkeit des Materials 3 kann der Segmentabstand s überbrückt werden, auch wenn sich die Transportsegmente TSk, TSk+1 infolge eines Wärmeeintrages ausdehnen (oder bei Abkühlung Schrumpfen) und sich der Segmentabstand s dadurch verändert. Durch Einbringen des Materials 3 kann der magnetische Fluss im Bereich zwischen den Transportsegmenten TSk, TSk+1 erhöht und während des Betriebs der Transporteinrichtung 1 auf die Transporteinheit Tn wirkende Störeinflüsse weiter reduziert werden.

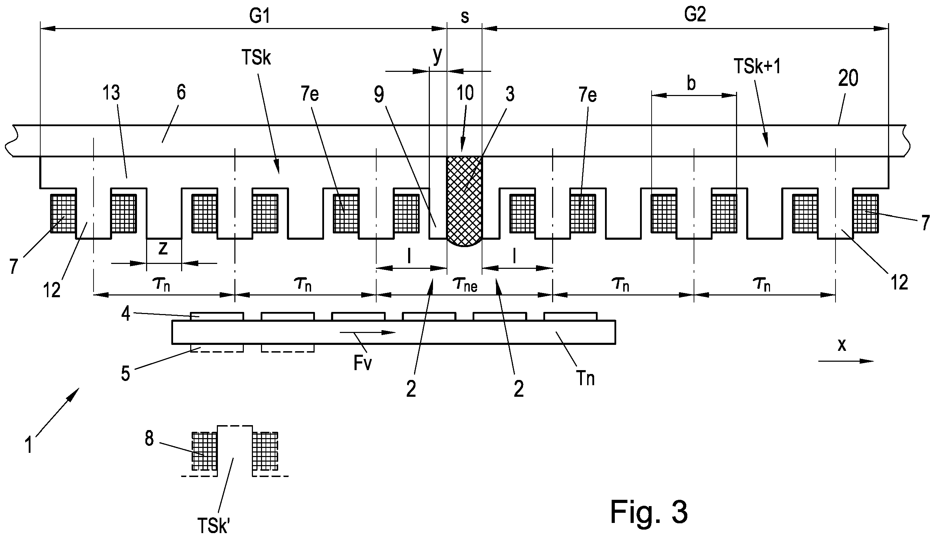

In Fig. 3 ist eine weitere Ausgestaltung der Erfindung dargestellt. Erfindungsgemäß weisen die in Längsrichtung x gesehenen Endabschnitte 2 der Kerne 13 der Transportsegmente TSk, TSk+1 zahnförmige Erweiterungen 9 auf. Bei einer vorteilhaften Auslegung der Transportsegmente TSk, TSk+1 wäre es möglich, einen Stoßbereich 10 zu bilden, der annähernd frei von Störeinflüssen aufgrund ungleichmäßigen magnetischen Flusses ist. Vorteilhafterweise könnte z.B. die Breite y einer zahnförmigen Erweiterung 9 so gewählt werden, dass sie im Bereich der halben Zahnbreite z eines Zahnes 12 des Kerns 13 liegt und der Segmentabstand s könnte z.B. so gewählt werden, dass er bei Erreichen einer definierten maximalen Temperatur minimal ist, vorzugsweise im Bereich weniger Zehntel mm. Der verbleibende Segmentabstand s könnte wie beschrieben zusätzlich mit einem vorzugsweise elastischen Material 3 magnetischer Leitfähigkeit $\mu$ befüllt werden, wobei die magnetischer Leitfähigkeit $\mu$ zumindest um Faktor 10, vorzugsweise zumindest um Faktor 100 größer als Luft ist. Demgemäß würde man einen Stoßbereich 10 zwischen den Transportsegmenten TSk, TSk+1 schaffen, der sich hinsichtlich des magnetischen Flusses annähernd gleich verhält wie die restlichen Abschnitte der Transportsegmente TSk, wodurch ein annähernd störungsfreier Betrieb der Transporteinrichtung 1 bzw. der Transporteinheit Tn im Stoßbereich 10 zwischen einzelnen Transportsegmenten TSk, TSk+1 erreicht wird.

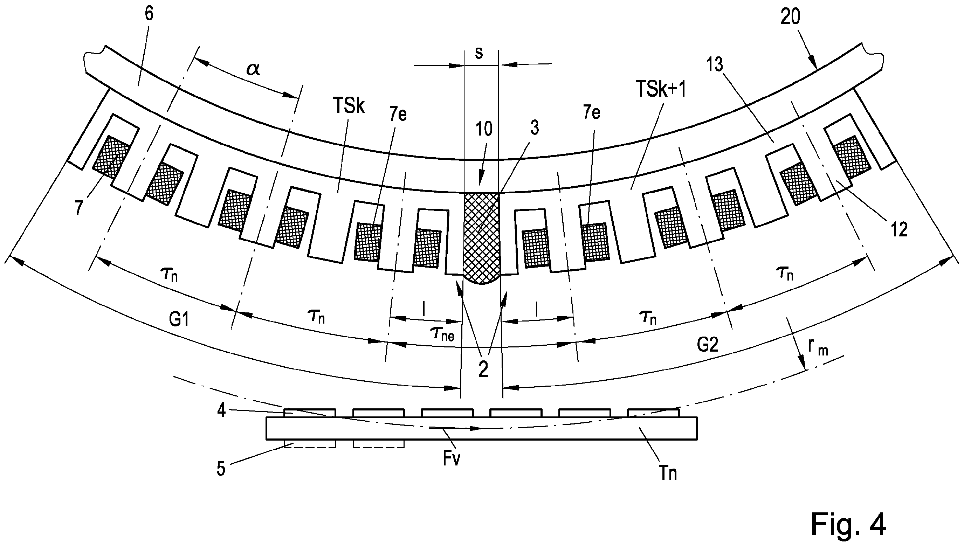

Die bisher beschriebene Ausgestaltung der Erfindung wurde zwar nur anhand der in Fig. 2 und Fig. 3 dargestellten geraden Transportsegmente TSk, TSk+1 gezeigt, natürlich sind vom Erfindungsgedanken aber auch alle anderen denkbaren Transportsegmente TSk umfasst, beispielsweise in Fig. 4 dargestellte gekrümmte Transportsegmente TSk, TSk+1, oder auch alle anderen denkbaren Ausführungsformen von Transportsegmenten TSk. In gleicher Weise wie bei der geraden Ausführung sind auch bei den gekrümmten Transportsegmenten TSk, TSk+1 in Fig. 4 die erfindungsgemäßen Merkmale realisierbar. Erfindungsgemäß sind die Transportsegmente TSk, TSk+1 so ausgebildet, dass, der Abstand I zwischen der Spulenmitte einer Endspule 7e eines Transportsegments TSk, TSk+1 und dem jeweiligen Ende des

Transportsegments TSK, TSk+1 kleiner als die halbe Nutteilung $\frac{\tau_{ne}}{2}$ der beiden benachbarten Endspulen 7e der Transportsegmente TSk, TSk+1 ist, wobei die Nutteilung $\tau_{ne}$ der beiden benachbarten Endspulen 7e vorzugsweise der Nutteilung $\tau_n$ der Antriebsspulen 7, 8 zumindest eines der Transportsegmente TSk, TSk+1 entspricht. Dabei werden der Abstand I, das Endes eines Transportsegmente TSk, TSk+1 und die Nutteilung $\tau_{ne}$ bzw. die Nutteilung $\tau_n$ bei gekrümmten Transportsegmenten TSk, TSk+1 im Bogenmaß bei einem bestimmten Radius $r_m$ angegeben.

Vorzugsweise sind die Endabschnitte 2 von Transportsegmenten TSk generell so ausgebildet, dass eine beliebige Kombination von verschiedenen Transportsegmenten TSk möglich ist, sodass eine möglichst flexible Gestaltung einer Transportstrecke ermöglicht wird. In Fig. 2 und Fig. 3 sind gerade Transportsegmente TSk, TSk+1 miteinander kombiniert und in Fig. 4 gekrümmte Transportsegmente TSk, TSk+1. Es wäre aber natürlich auch denkbar, gerade Transportsegmente TSk mit gekrümmten Transportsegmenten TSk zu kombinieren. Je nach Krümmung der Transportsegmente TSk sind die Antriebsspulen 7 des Transportsegments TSk in einem Spulenwinkel $\alpha$ zueinander angeordnet, wobei der Spulenwinkel $\alpha$ sich in Abhängigkeit der Krümmung verändert. Beispielsweise kann es Transportsegmente TSk geben, die eine über ihre Länge konstante Krümmung aufweisen (so wie ein Kreisbogen), aber auch Transportsegmente TSk, deren Krümmung sich über die Länge des Transportsegments TSk ändert, beispielsweise ein S-förmiges Transportsegment TSk.

Im Fall von zwei gekrümmten Transportsegmenten TSk, TSk+1, wie in Fig. 4 dargestellt ist, könnten beispielsweise der Abstand I, die Nutteilung $\tau_n$ und die Nutteilung $\tau_{ne}$ als Bogenmaß bei einem bestimmten Radius $r_m$ herangezogen werden, beispielsweise beim Radius $r_m$ des Bewegungspfades der Transporteinheit Tn (siehe gestrichelte Linie in Fig. 4). Zur Definition des maximalen Segmentabstands $s_{max}$ werden die Gesamtlängen G1, G2 der Transportsegmente TSk, TSk+1 sowie die Spulenbreite b (analog der Nutteilung $\tau_n$) ebenfalls im Bogenmaß angegeben.

Auch bei der Kombination gekrümmter Transportsegmente TSk ist natürlich ein Einbringen eines vorzugsweise elastischen Materials 3 hoher magnetischer Leitfähigkeit $\mu$ in den Stoßbereich 10 zwischen zwei Transportsegmenten TSk, TSk+1 zur Erhöhung der magnetischen Leitfähigkeit $\mu$ vorteilhaft. Auch können wiederum zahnförmige Erweiterungen 9 angeordnet sein, die ebenfalls zu einer Erhöhung der magnetischen Leitfähigkeit $\mu$ bzw. des magnetischen Flusses und damit zu einer Verringerung der Störeinflüsse im Stoßbereich 10 zwischen zwei Transportsegmenten TSk, TSk+1 beitragen.

**Patentansprüche**

1.    Transporteinrichtung (1) in Form eines Langstatorlinearmotors mit zumindest zwei benachbart und in einem Segmentabstand (s) in Längsrichtung voneinander beabstandet angeordneten Transportsegmenten (TSk, TSk+1), wobei an jedem der beiden Transportsegmente (TSk, TSk+1) in Längsrichtung eine, mit einer Nutteilung ($\tau_n$) voneinander beabstandet angeordnete Mehrzahl von Antriebsspulen (7, 8) angeordnet ist, **dadurch gekennzeichnet, dass** der Abstand (I) in Längsrichtung zwischen der Spulenmitte einer Endspule (7e) eines Transportsegments (TSk, TSk+1) und dem jeweiligen Ende des Transportsegments (TSk, TSk+1) in Längsrichtung kleiner als die halbe Nutteilung $(\frac{\tau_{ne}}{2}$ ) der beiden benachbarten Endspulen (7e) der Transportsegmente (TSk, TSk+1) ist, wobei die Nutteilung ($\tau_{ne}$) zwischen den Endspulen (7e) benachbarter Transportsegmente (TSk, TSk+1), der Nutteilung ($\tau_n$) der Antriebsspulen (7, 8) zumindest eines der Transportsegmente (TSk, TSk+1) entspricht.

2. Transporteinrichtung (1) nach Anspruch 1, **dadurch gekennzeichnet, dass** die Nutteilungen ($\tau_n$) der Antriebsspulen (7, 8) benachbarter Transportsegmente (TSk, TSk+1) gleich groß sind.

3. Transporteinrichtung (1) nach Anspruch 1 oder 2, **dadurch gekennzeichnet, dass** der maximale Segmentabstand ($s_{max}$) 1% des Mittelwerts der Gesamtlängen (G1, G2) zweier benachbarter Transportsegmente (TSk, TSk+1) beträgt.

4. Transporteinrichtung (1) nach Anspruch 1 oder 2, **dadurch gekennzeichnet, dass** der maximale Segmentabstand ($s_{max}$) so festgelegt ist, dass der Abstand (I) zwischen der Spulenmitte einer Endspule (7e) eines Transportsegments (TSk, TSk+1) und dem jeweiligen Ende des Transportsegments (TSk, TSk+1) der halben Spulenbreite $(\frac{b}{2}$ ) einer Antriebsspule (7, 8) entspricht, wobei das äußere Spulenende der Endspule (7e) des jeweiligen Transportsegments (TSk, TSk+1) in Längsrichtung vorzugsweise mit dem jeweiligen Ende des Transportsegments (TSk, TSk+1) abschließt.

5. Transporteinrichtung (1) einem der Ansprüche 1 bis 4, **dadurch gekennzeichnet, dass** der minimale Segmentabstand ($s_{min}$) so festgelegt ist, dass bei einer definierten maximalen Temperatur keine Berührung der benachbarten Transportsegmente (TSk, TSk+1) stattfindet.

6. Transporteinrichtung (1) nach einem der Ansprüche 1 bis 5, **dadurch gekennzeichnet, dass** im Stoßbereich (10) zwischen benachbarten Transportsegmenten (TSk, TSK+1) ein vorzugsweise elastisches Material (3) magnetischer Leitfähigkeit ($\mu$) angeordnet ist, wobei die magnetischer Leitfähigkeit ($\mu$) zumindest um Faktor 10, vorzugsweise zumindest um Faktor 100 größer als Luft ist.

7. Transporteinrichtung (1) nach einem der Ansprüche 1 bis 6, **dadurch gekennzeichnet, dass** an den Endabschnitten (2) der Transportsegmente (TSk, TSk+1) zahnförmige Erweiterungen (9) vorgesehen sind.

**Claims**

1. A transport apparatus (1) in the form of a long stator linear motor comprising at least two adjacent transport segments (TSk, TSk+1) that are mutually spaced in the longitudinal direction by a segment spacing (s), a plurality of drive coils (7, 8) that are mutually spaced by a tooth pitch ($\tau_n$) being arranged, in the longitudinal direction, on each of the two transport segments (TSk, TSk+1), **characterized in that** the spacing (I), in the longitudinal direction, between the coil center of an end coil (7e) of a transport segment (TSk, TSk+1) and the relevant end of the transport segment (TSk, TSk+1) in the longitudinal direction, is smaller than half the tooth pitch $(\frac{\tau_{ne}}{2}$ ) of the two adjacent end coils (7e) of the transport segments (TSk, TSk+1), wherein the tooth pitch ($\tau_{ne}$) between the end coils (7e) of adjacent transport segments (TSk, TSk+1) corresponds to the tooth pitch ($\tau_n$) of the drive coils (7, 8) of at least one of the transport segments (TSk, TSk+1).

2. The transport apparatus (1) according to claim 1, **characterized in that** the tooth pitches ($\tau_n$) of the drive coils (7, 8) of adjacent transport segments (TSk, TSk+1) are of the same size.

3. The transport apparatus (1) according to either claim 1 or claim 2, **characterized in that** the maximum segment spacing ($s_{max}$) is 1% of the average value of the total lengths (G1, G2) of two adjacent transport segments (TSk, TSk+1).

4. The transport apparatus (1) according to either claim 1 or claim 2, **characterized in that** the maximum segment spacing ($s_{max}$) is set such that the spacing (I) between the coil center of an end coil (7e) of a transport segment (TSk, TSk+1) and the relevant end of the transport segment (TSk, TSk+1) corresponds to half the coil width $(\frac{b}{2}$ ) of a drive coil (7, 8), the outer coil end of the end coil (7e) of the relevant transport segment (TSk, TSk+1) preferably ending flush, in the longitudinal direction, with the relevant end of the transport segment (TSk, TSk+1).

5. The transport apparatus (1) according to any of claims 1 to 4, **characterized in that** the minimum segment spacing ($s_{min}$) is set such that, at a defined maximum temperature, the adjacent transport segments (TSk, TSk+1) do not touch.

6. The transport apparatus (1) according to any of claims 1 to 5, **characterized in that** a preferably resilient material (3) having a magnetic permeability

(μ) is arranged in the joint region (10) between adjacent transport segments (TSk, TSk+1), the magnetic permeability (μ) being greater than that of air at least by the factor of 10, preferably at least by the factor of 100.

7. The transport apparatus (1) according to any of claims 1 to 6, **characterized in that** toothlike extensions (9) are provided on the end portions (2) of the transport segments (TSk, TSk+1).


## Revendications

1. Dispositif de transport (1) sous la forme d'un moteur linéaire à stator long, comportant au moins deux segments de transport (TSk, TSk + 1) disposés de façon adjacente et espacés l'un de l'autre à une ou plusieurs distances de segment dans le sens longitudinal, une pluralité de bobines d'entraînement (7, 8) espacées les unes des autres avec un pas d'encoche ($\tau_n$) étant disposée sur chacun des deux segments de transport (TSk, TSk + 1) dans le sens longitudinal, **caractérisé en ce que** la distance (l) dans le sens longitudinal entre le centre d'une bobine d'extrémité (7e) d'un segment de transport (TSk, TSk + 1) et l'extrémité respective du segment de transport (TSk, TSk + 1) dans la direction longitudinale est inférieure à la moitié du pas d'encoche $\left(\frac{\tau_{ne}}{2}\right)$ des deux bobines d'extrémité adjacentes (7e) des segments de transport (TSk, TSk + 1), le pas d'encoche ($\tau_{ne}$) entre les bobines d'extrémité (7e) de segments de transport adjacents (TSk, TSk + 1) correspondant au pas de fente ($\tau_n$) des bobines d'entraînement (7, 8) d'au moins l'un des segments de transport (TSk, TSk + 1).

2. Dispositif de transport (1) selon la revendication 1, **caractérisé en ce que** les pas d'encoche ($\tau_n$) des bobines d'entraînement (7, 8) de segments de transport adjacents (TSk, TSk + 1) sont de même taille.

3. Dispositif de transport (1) selon la revendication 1 ou 2, **caractérisé en ce que** la distance maximale de segment ($s_{max}$) est de 1 % de la moyenne des longueurs totales (G1, G2) de deux segments de transport adjacents (TSk, TSk + 1).

4. Dispositif de transport (1) selon la revendication 1 ou 2, **caractérisé en ce que** la distance maximale de segment ($s_{max}$) est réglée de telle sorte que la distance (l) entre le centre d'une bobine d'extrémité (7e) d'un segment de transport (TSk, TSk + 1) et l'extrémité respective du segment de transport (TSk, TSk + 1) correspond à la moitié de la largeur $\left(\frac{b}{2}\right)$ d'une bobine d'entraînement (7, 8), l'extrémité extérieure de la bobine d'extrémité (7e) du segment de transport respectif (TSk, TSk + 1) dans la direction longitudinale se terminant de préférence avec l'extrémité respective du segment de transport (TSk, TSk + 1).

5. Dispositif de transport (1) selon l'une des revendications 1 à 4, **caractérisé en ce que** la distance minimale de segment ($s_{min}$) est réglée de telle sorte que, à une température maximale définie, aucun contact n'existe entre les segments de transport adjacents (TSk, TSk + 1).

6. Dispositif de transport (1) selon l'une des revendications 1 à 5, **caractérisé en ce qu'**un matériau de préférence élastique (3) à conductivité magnétique (μ) est disposé dans la zone de jonction (10) entre des segments de transport adjacents (TSk, TSk + 1), la conductivité magnétique (μ) étant au moins 10 fois, de préférence au moins 100 fois plus élevée que celle de l'air.

7. Dispositif de transport (1) selon l'une des revendications 1 à 6, **caractérisé en ce que** des extensions en forme de dent (9) sont prévues sur les tronçons d'extrémité (2) des segments de transport (TSk, TSk + 1).

Fig. 1

EP 3 425 780 B1

Fig. 2

EP 3 425 780 B1

Fig. 3

EP 3 425 780 B1

Fig. 4

EP 3 425 780 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013143783 A1
- US 6876107 B2
- US 20130074724 A1
- WO 2004103792 A1
- WO 2015042409 A1
- US 20110125307 A1
- US 20030230941 A1
- US 20100236445 A1
- US 20160218608 A1
- EP 3031755 A1
- JP 2007089260 A
- EP 3156354 A1